(19) **Europäisches Patentamt / European Patent Office / Office européen des brevets**

(11) **EP 4 408 111 A1**

(12) **EUROPEAN PATENT APPLICATION**
published in accordance with Art. 153(4) EPC

(43) Date of publication:
**31.07.2024 Bulletin 2024/31**

(21) Application number: **21957901.8**

(22) Date of filing: **24.09.2021**

(51) International Patent Classification (IPC):
**H04W 74/08** (2024.01)     **H04B 17/309** (2015.01)
**H04B 7/185** (2006.01)

(52) Cooperative Patent Classification (CPC):
**H04B 7/185; H04B 17/309; H04W 74/08**

(86) International application number:
**PCT/CN2021/120382**

(87) International publication number:
**WO 2023/044772 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **ZHU, Yajun**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **COMMUNICATION METHOD, COMMUNICATION APPARATUS, COMMUNICATION DEVICE AND STORAGE MEDIUM**

(57)     Provided in the embodiments of the present disclosure are a communication method, a communication apparatus, a communication device and a storage medium. The communication method comprises: sending first information, wherein the first information comprises timing range information and first indication information, the timing range information indicating the timing range of a time offset, and the first indication information indicating the time offset determined from the timing range. By means of the communication method provided in the embodiments of the present disclosure, a time offset suitable for the current satellite communication scenario can be determined, thereby improving the accuracy of time offsets determined in different satellite communication scenarios, and thus improving the reliability of transmission between a network device of an NTN and a UE.

| network device in NTN | UE |
|---|---|

S41: sending first information, in which the first information includes: timing range information and first indication information; the timing range information is configured to indicate a timing range for the time offset; and the first indication information is configured to indicate the time offset determined from the timing range

**FIG. 4**

## Description

## TECHNICAL FIELD

The present disclosure relates to, but is not limited to, the field of communication technology, and more particularly to a communication method, a communication apparatus, a communication device and a storage medium.

## BACKGROUND

At present, the continuous emergence of new Internet applications such as a new generation of augmented reality (AR) or virtual reality (VR) has put forward a higher requirement for the wireless communication technology, and drives the continuous evolution of the wireless communication technology to meet needs of applications. At present, a cellular mobile communication technology is in an evolutionary stage of a new generation of technology. An important feature of the new generation of technology is to support a flexible configuration of multiple business types. Different business types have different requirements for the wireless communication technology. For example, an enhanced mobile broad band (eMBB) business type mainly requires a large bandwidth, a high speed and others; an ultra-reliable low latency communication (URLLC) business type mainly requires a high reliability, a low latency and others; and a massive machine type communication (mMTC) business type mainly requires big data. Therefore, a new generation of wireless communication system requires a flexible and configurable design to support transmissions of multiple business types.

In the research of the wireless communication technology, satellite communication is considered to be an important aspect of the future development of the wireless communication technology. The satellite communication refers to a communication in which a radio communication device on the ground uses a satellite as a relay. A satellite communication system consists of a satellite part and a ground part. The satellite communication is featured by a large communication range, and a communication may be performed between any two points as long as they are within the coverage of radio waves emitted by the satellite. Moreover, the satellite communication has a high reliability and is not easily affected by land disasters. As a supplement to a current terrestrial cellular communication system, the satellite communication may have following benefits.

The satellite communication extends the coverage range, and may solve communication problems in areas which cannot be covered by the current cellular communication system or may be covered but with a high cost, such as oceans, deserts, remote mountainous areas, etc.

The satellite communication supports an emergency communication. In case that an infrastructure of a cellular communication is unavailable in extreme situations, such as disasters, like an earthquake, the satellite communication may quickly establish a communication connection.

The satellite communication provides industry applications. For example, for a business that requires a long-distance transmission but is delay-sensitive, the satellite communication may be used to reduce the delay of the business transmission.

It is foreseeable that in a future wireless communication system, the satellite communication system and the terrestrial cellular communication system will be deeply integrated gradually, truly realizing intelligent connections of all things. However, due to the high-speed movement of the satellite, the reliability of data interaction in a satellite communication scenario cannot be effectively achieved.

## SUMMARY

Embodiments of the present disclosure provide a communication method, a communication apparatus, a communication device, and a storage medium.

According to a first aspect of the present disclosure, a communication method is provided, which is performed by a network device in a non-terrestrial network (NTN), and includes: sending first information. The first information includes: timing range information and first indication information; the timing range information is configured to indicate a timing range for a time offset; and the first indication information is configured to indicate the time offset determined from the timing range.

In some embodiments, the timing range information includes: a first timing range. The first information further includes: reference timing information indicating a reference timing time. The reference timing time and the first indication information are configured to indicate the time offset determined from the first timing range.

In some embodiments, the method further includes: determining the reference timing information based on ephemeris information of a satellite.

In some embodiments, the reference timing time includes one of: one or more slots corresponding to a predetermined subcarrier spacing (SCS); or one or more slots.

In some embodiments, the timing range information includes: a second timing range or second indication information indicating the second timing range. The first indication information is configured to indicate the time offset determined from the second timing range.

In some embodiments, the timing range information includes: ephemeris information. The ephemeris information is configured to determine a second timing range for the time offset. The first indication information is configured to indicate the time offset determined from the second timing range.

In some embodiments, sending the first information includes: sending a high-layer signaling or a physical layer signaling carrying the first information.

According to a second aspect of the present disclosure, a communication method is provided, which is performed by a user equipment (UE), and includes: receiving first information, which includes timing range information and first indication information; determining a timing range for a time offset based on the timing range information; and determining the time offset from the timing range based on the first indication information.

In some embodiments, the first information includes: reference timing information indicating a reference timing time. Determining the timing range for the time offset based on the timing range information includes: determining a first timing range for the time offset based on the first timing range included in the timing range information. Determining the time offset from the timing range based on the first indication information includes: determining the time offset from the first timing range based on the first indication information and the reference timing time.

In some embodiments, the reference timing information is determined based on ephemeris information of a satellite.

In some embodiments, the reference timing information includes one of: one or more slots corresponding to a predetermined SCS; or one or more slots.

In some embodiments, determining the timing range for the time offset based on the timing range information includes one of:

> determining a second timing range for the time offset based on the second timing range included in the timing range information;
> determining a second timing range for the time offset based on second indication information indicating the second timing range and included in the timing range information; or
> determining a second timing range for the time offset based on ephemeris information included in the timing range information.

In some embodiments, determining the second timing range for the time offset based on the ephemeris information included in the timing range information includes: determining the second timing range for the time offset based on the ephemeris information and a preset correspondence relationship. The correspondence relationship is a correspondence relationship between the ephemeris information and the second timing range.

In some embodiments, receiving the first information includes: receiving a high-layer signaling or a physical layer signaling carrying the first information.

According to a third aspect of the present disclosure, a communication apparatus is provided, which is applied to a network device in an NTN, and includes: a sending module configured to send first information. The first information includes: timing range information and first indication information; the timing range information is configured to indicate a timing range for a time offset; and the first indication information is configured to indicate the time offset determined from the timing range.

In some embodiments, the timing range information includes: a first timing range. The first information further includes: reference timing information indicating a reference timing time. The reference timing time and the first indication information are configured to indicate the time offset determined from the first timing range.

In some embodiments, the apparatus includes: a processing module configured to determine the reference timing information based on ephemeris information of a satellite.

In some embodiments, the reference timing time includes one of: one or more slots corresponding to a predetermined SCS; or one or more slots.

In some embodiments, the timing range information includes: a second timing range or second indication information indicating the second timing range. The first indication information is configured to indicate the time offset determined from the second timing range.

In some embodiments, the timing range information includes: ephemeris information. The ephemeris information is configured to determine a second timing range for the time offset. The first indication information is configured to indicate the time offset determined from the second timing range.

In some embodiments, the sending module is configured to send a high-layer signaling or a physical layer signaling carrying the first information.

According to a fourth aspect of the present disclosure, a communication apparatus is provided, which is applied to a UE, and includes: a receiving module configured to receive first information including timing range information and first indication information; and a processing module configured to determine a timing range for a time offset based on the timing range information, and determine the time offset from the timing range based on the first indication information.

In some embodiments, the first information includes: reference timing information indicating a reference timing time. The processing module is configured to determine a first timing range for the time offset based on the first timing range included in the timing range information. The processing module is configured to determine the time offset from the first timing range based on the first indication information and the reference timing time.

In some embodiments, the reference timing information is determined based on ephemeris information of a satellite.

In some embodiments, the reference timing information includes one of: one or more slots corresponding to a predetermined SCS; or one or more slots.

In some embodiments, the processing module is configured to: determine a second timing range for the time offset based on the second timing range included in the timing range information; or determine a second timing range for the time offset based on second indication information indicating the second timing range and included in the timing range information; or determine a second timing range for the time offset based on ephemeris information included in the timing range information.

In some embodiments, the processing module is configured to determine the second timing range for the time offset based on the ephemeris information and a preset correspondence relationship. The correspondence relationship is a correspondence relationship between the ephemeris information and the second timing range.

In some embodiments, the receiving module is configured to receive a high-layer signaling or a physical layer signaling carrying the first information.

According to a fifth aspect of embodiments of the present disclosure, a communication device is provided, which includes: a processor; and a memory configured to store a processor-executable instruction. The processor is configured to implement the communication method of any embodiment of the present disclosure when running the executable instruction.

According to a sixth aspect of embodiments of the present disclosure, a computer storage medium is provided, which has stored therein a computer executable program that, when executed by a processor, causes the communication method of any embodiment of the present disclosure to be implemented.

The technical solutions provided in embodiments of the present disclosure may include following advantageous effects.

In embodiments of the present disclosure, the first information may be sent to the UE through the network device in the NTN. The first information includes: the timing range information and the first indication information. The timing range information indicates the timing range for the time offset. The first indication information indicates the time offset determined from the timing range. In this way, embodiments of the present disclosure may inform the UE of the timing range and the first indication information in a satellite communication scenario through the network device in the NTN, so that the UE may determine the time offset suitable for a current satellite communication scenario based on the first indication information; thereby improving the accuracy of the time offset determined in different satellite communication scenarios, and improving the reliability of the transmission between the network device in the NTN and the UE.

It should be understood that both the foregoing general description and the following detailed description are illustrative and explanatory and are not restrictive of embodiments of the present disclosure.

**BRIEF DESCRIPTION OF THE DRAWINGS**

FIG. 1 is a schematic diagram showing a wireless communication system.
FIG. 2 is a schematic diagram showing a timing alignment of uplink and downlink transmissions at a base station side according to an illustrative embodiment.
FIG. 3 is a schematic diagram showing a timing misalignment of uplink and downlink transmissions at a base station side according to an illustrative embodiment.
FIG. 4 is a schematic diagram showing a communication method according to an illustrative embodiment.
FIG. 5 is a schematic diagram showing a communication method according to an illustrative embodiment.
FIG. 6 is a schematic diagram showing a communication method according to an illustrative embodiment.
FIG. 7 is a schematic diagram showing a communication method according to an illustrative embodiment.
FIG. 8 is a schematic block diagram showing a communication apparatus according to an illustrative embodiment.
FIG. 9 is a schematic block diagram showing a communication apparatus according to an illustrative embodiment.
FIG. 10 is a schematic block diagram showing a user equipment according to an illustrative embodiment.
FIG. 11 is a schematic block diagram showing a base station according to an illustrative embodiment.

**DETAILED DESCRIPTION**

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects related to the present disclosure as recited in the appended claims.

Terms used in embodiments of the present disclosure are only for the purpose of describing specific embodiments, but should not be construed to limit the present disclosure. As used in embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, the information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

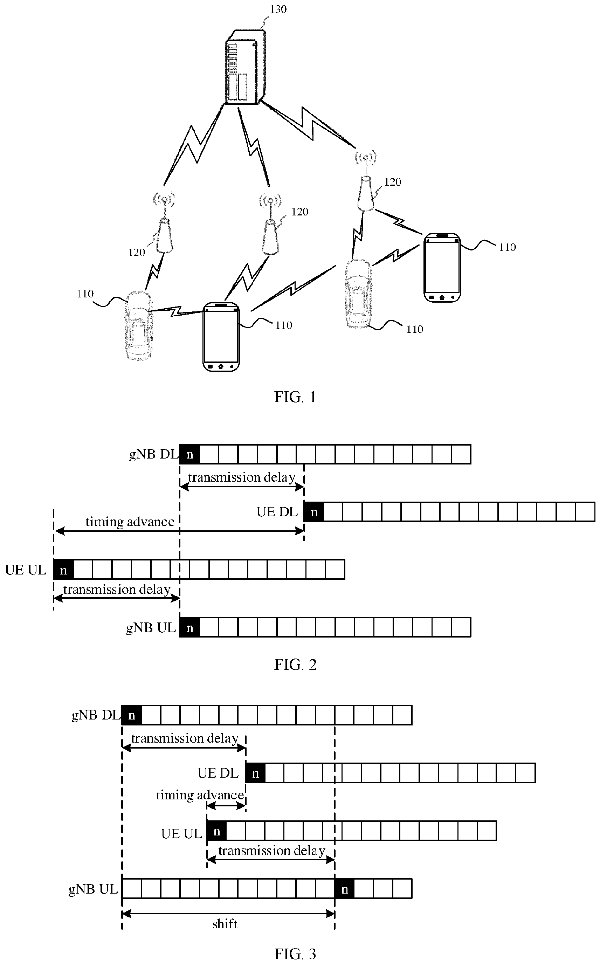

Referring to FIG. 1, which is a schematic diagram showing a wireless communication system according to embodiments of the present disclosure. As shown in FIG. 1, the wireless communication system is a communication system based on a cellular mobile communication technology, and may include several user equipment 110 and several base stations 120.

The user equipment 110 may be a device that provides voice and/or data connectivity to a user. The user equipment 110 may communicate with one or more core networks via a radio access network (RAN). The user equipment 110 may be an Internet of Things user equipment, such as a sensor device, a mobile phone (or referred to as a "cellular" phone) and a computer with an Internet of Things user equipment. For example, it may be a fixed, portable, pocket-sized, handheld, built-in computer or vehicle-mounted apparatus. For example, it may be a station (STA), a subscriber unit, a subscriber station, a mobile station, a mobile, a remote station, an access point, a remote terminal, an access terminal, a user terminal, a user agent, a user device, or a user equipment (UE). Alternatively, the user equipment 110 may be a device of an unmanned aerial vehicle. Alternatively, the user equipment 110 may be a vehicle-mounted device, for example, an electronic control unit with a wireless communication function, or a wireless user equipment externally connected with an electronic control unit. Alternatively, the user equipment 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Alternatively, the wireless communication system may be a 5G system, also referred to as a new radio system or a 5G NR system. Alternatively, the wireless communication system may be a next generation system of the 5G system. An access network in the 5G system may be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a medium access control (MAC) layer is provided in the central unit. A protocol stack of a physical (PHY) layer is provided in the distributed unit. The specific implementation of the base station 120 is not limited in embodiments of the present disclosure.

A wireless connection can be established between the base station 120 and the user equipment 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between UEs 110, for example, a vehicle to vehicle (V2V) communication, a vehicle to infrastructure (V2I) communication and a vehicle to pedestrian (V2P) communication in a vehicle to everything (V2X) communication.

Here, the above user equipment may be considered as a terminal device of the following embodiments.

In some embodiments, the above wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in embodiments of the present disclosure.

In order to better understand the technical solution described in any embodiment of the present disclosure, a satellite communication scenario and other related contents are partially described first.

In the satellite communication scenario, due to a longer signal transmission distance between a transmitting end and a receiving end, data transmission takes a long time. The long time is called a transmission delay.

For transmissions (including uplink and downlink transmissions), a time offset is introduced to compensate for the transmission delay.

In an embodiment, an uplink transmission and a downlink transmission at a base station side are timing aligned. As shown in FIG. 2, the uplink transmission (gNB UL) and the downlink transmission (gNB DL) of the base station (gNB) are timing aligned, that is, frames marked n in the gNB UL and the gNB DL in FIG. 2 are aligned. Referring to FIG. 2, a transmission delay exists between the gNB UL and a downlink transmission of a user equipment (UE DL). An uplink transmission timing advance (TA) of the UE needs to take into account a transmission delay from the UE to a satellite, so that uplink transmissions of different UEs may reach the gNB within a predetermined time range.

In another embodiment, an uplink transmission and a downlink transmission at a base station side are not timing aligned. As shown in FIG. 3, the uplink transmission and the downlink transmission of the gNB are not aligned, that is, frames marked n in the gNB UL and the gNB DL in FIG. 3 are not aligned, a shift (gNB DL-UL frame timing shift) exists in a time domain, and a transmission delay exists between the downlink transmission of the gNB (gNB DL) and a downlink transmission of a UE (UE DL). Similarly, an uplink transmission timing advance (TA) of the UE needs to take into account a transmission delay from a terminal to a satellite, so that uplink transmissions of different UEs may reach the gNB within a predetermined time range. In this embodiment, when considering the timing advance, the timing shift (gNB DL-UL frame timing shift) of the uplink transmission and the downlink transmission of the gNB in the time domain will be taken into account.

In an embodiment, a time offset may be applied to at least one of the following transmissions, but not limited to the following transmissions: a physical uplink shared channel (PUSCH) transmission scheduled by downlink control information (DCI), a transmission of hybrid automatic repeat request (HARQ) feedback information, and a media access control (MAC) control element (CE). In an embodiment, the time offset includes: a timing offset (Koffset). For example, the timing offset is applied to the transmission of the HARQ feedback information. If a last slot in which a UE receives a physical downlink shared channel (PDSCH) is slot n, the UE transmits a physical uplink control channel (PUCCH) including corresponding HARQ-ACK information in slot $n+K_1+Koffset$; where the $K_1$ is a number of slots. For another example, the timing offset is applied to a PUSCH of the DCI. If the UE receives the DCI scheduling the PUSCH transmission in slot n, and the DCI indicates that a slot shift is $K_2$; then the UE transmits the PUSCH in slot

$$n \times \frac{2\mu_{PUSCH}}{2\mu_{PDCCH}} + K_2 + Koffset$$

; where the $\mu_{PUSCH}$ and

the $\mu_{PDCCH}$ are subcarrier spacing configurations of the PUSCH and the physical downlink shared channel (PDSCH), respectively.

In an embodiment, a value of the Koffset depends on a transmission delay from the UE to a network device (for example, a base station). For a scenario of satellite communication, if different satellites are in space orbits at different altitudes, the values of the Koffset will be different.

In the scenario of the satellite communication, a range of the time offset used in different scenarios may be different. In an embodiment, the range of the time offset depends on orbit information and position information of a reference point. In an embodiment, the range of the time offset is greater than or equal to 0 and less than or equal to 450 ms.

In an embodiment, the range of the time offset supports all satellite communication scenarios. In this embodiment, a granularity indicated by the range of the time offset is relatively large, resulting in additional signaling overhead.

In an embodiment, different ranges of the time offset support different satellite communication scenarios. In this embodiment, different application scenarios and value ranges corresponding to the application scenarios need to be defined.

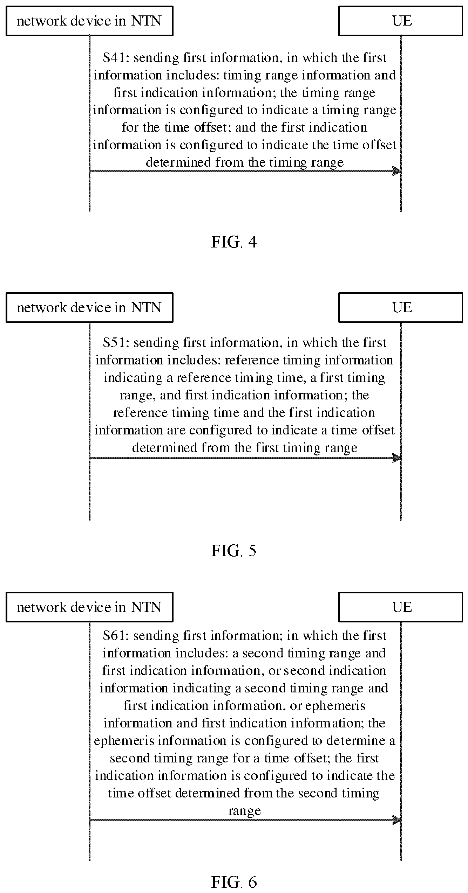

As shown in FIG. 4, embodiments of the present disclosure provide a communication method, which is performed by a network device in an NTN, and includes a following step.

In step S41, first information is sent. The first information includes: timing range information and first indication information; the timing range information is configured to indicate a timing range for a time offset; and the first indication information is configured to indicate the time offset determined from the timing range.

The method according to embodiments of the present disclosure is applied to the NTN, which includes, but not limited to: a network in which a satellite is used as a relay for a communication.

The method according to embodiments of the present disclosure may be performed by the network device in the NTN. The network device in the NTN includes: an access network device or a core network device.

In an embodiment, the access network device may be, but not limited to, various types of base stations. For example, it may be a 2G base station, a 3G base station, a 4G base station, a 5G base station or other evolved base stations.

In an embodiment, the core network device may be various physical entities or logical entities, such as a mobility management entity or a serving gateway. When the communication method is performed by the core network device, the core network device sends the first information to the base station, and the base station forwards the first information to a UE.

In an embodiment, the time offset includes: a timing offset (Koffset).

A communication method according to embodiments of the present disclosure is performed by the network device in the NTN, and may include: sending first information to a UE. The first information includes: timing range information and first indication information. The timing range information indicates a timing range for a Koffset. The first indication information indicates the Koffset determined from the timing range.

In an embodiment, the Koffset may be used to compensate for a timing deviation of an uplink and a downlink of the UE.

In an embodiment, the Koffset is greater than or equal to a timing advance. For example, if the timing advance is 10 milliseconds (ms), the Koffset is 12 ms.

In this way, a transmission delay of a transmission between the network device (for example, the base station) and the UE in the NTN may be supplemented by the time offset, thereby improving the reliability of a data transmission between the network device in the NTN and the UE.

In an embodiment, the timing range information includes: a first timing range or a second timing range.

In an embodiment, the first timing range may be considered as a unified timing range (also called unified value range). Illustratively, the base station sends a unified timing range of 0 to 1000 ms or 0 to 500 ms to some or all UEs in a cell. Illustratively, the unified timing range supports all application scenarios of the satellite communication.

In another embodiment, the second timing range may be considered as one of a predetermined number of timing ranges specified in a communication protocol. Illustratively, as shown in the table below, the second timing range may be 0 to 100 ms, 101 to 200 ms, 201 to 300 ms, 301 to 400 ms, or 401 to 500 ms.

Table 1

| sequence number | second timing range |
|---|---|
| 1 | 0 to 100 ms |
| 2 | 101 to 200 ms |
| 3 | 201 to 300 ms |
| 4 | 301 to 400 ms |
| 5 | 401 to 500 ms |

Here, the predetermined number of second timing ranges may be stored in the base station in advance. When the base station sends the first information, the base station may carry one of the second timing ranges and send it to the UE. Here, the predetermined number may be greater than 1. Here, the predetermined number of second timing ranges may not be the ranges shown in Table 1. For example, the predetermined number of second timing ranges may also be 0 to 200 ms, 201 to 400 ms, 401 to 600 ms, or the like.

It may be understood that each element in the above Table 1 exists independently. These elements are illustratively listed in a same table, but it does not mean that all elements in the table must exist at the same time as shown in the table. A value of each element in Table 1 does not depend on a value of any other element in Table 1. Therefore, those skilled in the art may understand that the value of each element in Table 1 corresponds to an independent embodiment.

In an embodiment, the first timing range may be divided into one or more second timing ranges. For example, the first timing range is 0 to 500 ms; and the first timing range may be divided into 5 second timing ranges, which are 0 to 100 ms, 101 to 200 ms, 201 to 300 ms, 301 to 400 ms, and 401 to 500 ms.

In another embodiment, the first timing range is greater than or equal to the second timing range. For example, the first timing range is 0 to 500 ms, and the second timing range is 301 to 400 ms.

In yet another embodiment, the first timing range and the second timing range have no specific relationship. For example, the first timing range is 0 to 200 ms, and the second timing range is 150 ms to 250 ms.

In an embodiment, the first indication information may be information of a first predetermined number of bits. Here, the first predetermined number of bits may be one or more bits.

Illustratively, the communication protocol predefines a correspondence relationship between the first indication information and the Koffset of the timing range for the Koffset. For example, the timing range for the Koffset is 0 to 100 ms. For example, the first indication information may be indicated by 4 bits, when the first indication information is "0000", it indicates that the Koffset is 0 ms; when the first indication information is "0001", it indicates that the Koffset is 10 ms; when the first indication information is "0010", it indicates that the Koffset is 20 ms; and so on. For another example, the first indication information may be indicated by 8 bits, when the first indication information is "00000000", it indicates that the Koffset is 0 ms; when the first indication information is "00000001", it indicates that the Koffset is 1 ms; when the first indication information is "00000010", it indicates that the Koffset is 2 ms; when the first indication information is "00000011", it indicates that the Koffset is 3 ms; and so on.

In embodiments of the present disclosure, the network device in the NTN may inform the UE of the timing range and the first indication information in the satellite communication scenario, so that the UE may determine a time offset suitable for a current satellite communication scenario based on the first indication information; thereby improving the accuracy of the time offset determined in different satellite communication scenarios, and improving the reliability of the transmission between the network device in the NTN and the UE.

Embodiments of the present disclosure provide a communication method, which is performed by the network device in the NTN, and includes: sending a high-layer signaling or a physical layer signaling carrying the first information.

In an embodiment, the high-layer signaling includes: a radio resource control (RRC) signaling or a media access control (MAC) control element (CE) signaling.

In an embodiment, the physical layer signaling includes: a downlink control information (DCI) signaling.

In another embodiment, the network device in the NTN may also send the first information via an existing system message or a dedicated system message.

In embodiments of the present disclosure, the network device in the NTN may send the first information by carrying it in the high-layer signaling, the physical layer signaling, the system message, etc., thereby improving an utilization efficiency of the high-layer signaling, the physical layer signaling, or the system message, and saving the signaling overhead.

It should be noted that those skilled in the art may understand that the methods according to embodiments of the present disclosure each may be performed alone or together with other methods in embodiments of the present disclosure or in the related art.

As shown in FIG. 5, embodiments of the present disclosure provide a communication method, which is performed by a network device in an NTN and may include a following step.

In step S51, first information is sent. The first information includes: reference timing information indicating a reference timing time, a first timing range, and first indication information. The reference timing time and the first indication information are configured to indicate a time offset determined from the first timing range.

In some embodiments of the present disclosure, the first indication information is the first indication information in the step S41, the first timing range is the first timing range in the step S41, and the time offset is the time offset in the step S41.

Embodiments of the present disclosure provide a communication method, which is performed by the network device in the NTN, and may include: determining the reference timing information based on ephemeris information of a satellite.

Here, the ephemeris information of the satellite may also refer to orbit information of the satellite, and the ephemeris information of the satellite may indicate orbit statuses of the satellite at different times. In this way, the network device in the NTN may determine an altitude range of the satellite according to information of the satellite or the orbit information of the satellite, and determine the reference timing information based on the altitude range. Here, the altitude range of the satellite is positively correlated with the reference timing time indicated by the reference timing information.

In this way, according to embodiments of the present disclosure, an accurate reference timing time may be determined based on an actual trajectory of the satellite, and thus an accurate time offset may be determined.

In an embodiment, the reference timing time includes: one or more slots. For example, if one slot is 1 ms, and if the reference timing time includes 1 slot, the reference timing time is 1 ms; and if the reference timing time includes 10 slots, the reference timing time is 10 ms.

In another embodiment, the reference timing time includes: one or more slots corresponding to a predetermined subcarrier spacing (SCS). Here, the predetermined subcarrier spacing may refer to any SCS. For example, the predetermined SCS may be 15 KHZ, 30 KHZ, or 240 KHZ, etc. Illustratively, if the predetermined SCS is 15 KHZ, then 1 symbol is 66.67 microseconds ($\mu$s); if one slot includes 14 symbols, then one slot is approximately 1 ms. If the reference timing time includes: one slot corresponding to the predetermined SCS, the reference timing time is 1 ms. If the reference timing time includes: 12 slots corresponding to the predetermined SCS, the reference timing time is 12 ms.

In yet another embodiment, the reference timing time may also include: multiple symbols corresponding to the predetermined SCS.

In an embodiment, a product of the reference timing time and a value indicated by the first indication information is used to indicate the time offset determined from the first timing range.

For example, if the first timing range sent by a base station to a UE is 0 to 1000 ms, the first indication information is "0001", and the reference timing time indicated by the reference timing information is 10 ms; the value indicated by the first indication information is 1, and the reference timing time is 10 ms, then it is determined that the first indication information and the reference timing time indicate that the time offset in the first timing range of 0 to 1000 ms is 10 ms.

For example, if the first timing range sent by a base station to a UE is 0 to 1000 ms, the first indication information is "0011", and the reference timing time indicated by the reference timing information is 10 ms; the value indicated by the first indication information is 3, and the reference timing time is 10 ms, then it is determined that the first indication information and the reference timing time indicate that the time offset in the first timing range of 0 to 1000 ms is 30 ms.

For example, if the first timing range sent by a base station to a UE is 0 to 1000 ms, the first indication information is "0011", and the reference timing time indicated by the reference timing information is 100 ms; the value indicated by the first indication information is 3, and the reference timing time is 100 ms, then it is determined that the first indication information and the reference timing time indicate that the time offset in the first timing range of 0 to 1000 ms is 300 ms.

In embodiments of the present disclosure, the network device in the NTN may send the first timing range to the UE to support all application scenarios of the satellite communication, and send the reference timing information and the first indication information to the UE. In this way, the UE may be indicated the time offset in the first timing range with different granularities based on different reference timing information and the first indication information. This allows the UE to precisely determine the time offset in various application scenarios of the satellite communication through the unified timing range, thereby improving the reliability of the transmission between the network device in the NTN and the UE in these application scenarios.

Moreover, when the first timing range is relatively large, a larger reference timing time may be configured, so that even if the first indication information with a relatively less number of bits is used, an accurate time offset of the transmission between the network device in the NTN and the UE can also be indicated. In this way, the number of bits of the first indication information may be saved, and the signaling overhead may be reduced.

It should be noted that those skilled in the art may understand that the methods according to embodiments of the present disclosure each may be performed alone or together with other methods in embodiments of the present disclosure or in the related art.

As shown in FIG. 6, embodiments of the present disclosure provide a communication method, which is performed by a network device in an NTN and may include a following step.

In step S61, first information is sent. The first information includes: a second timing range and first indication information, or second indication information indicating a second timing range and first indication information, or ephemeris information and first indication information. The ephemeris information is configured to determine a second timing range for a time offset. The first indication information is configured to indicate the time offset determined from the second timing range.

In some embodiments of the present disclosure, the first indication information is the first indication information in the step S41, the second timing range is the second timing range in the step S41, and the time offset is the time offset in the step S41.

In an embodiment, the second indication information is information of a second predetermined number of bits. Here, the second predetermined number of bits may be one or more bits.

For example, a communication protocol pre-defines a correspondence relationship between the second indication information and the second timing range. For example, when the second indication information is "001", it indicates that the second timing range is 0 to 100 ms; when the second indication information is "010", it indicates that the second timing range is 101 to 200 ms; when the second indication information is "011", it indicates that the second timing range is 201 to 300 ms; when the second indication information is "0100", it indicates that the second timing range is 301 to 400 ms; when the second indication information is "0101", it indicates that the second timing range is 401 to 500 ms; and so on. In this way, after receiving the second indication information, a UE may determine the second timing range based on the second indication information.

In an embodiment, ephemeris information of a satellite may also refer to orbit information of the satellite. The ephemeris information or the orbit information of the satellite may be used to determine an altitude range of the satellite. Here, the altitude range of the satellite is positively correlated with upper and lower limit values of the second timing range. For example, if the altitude of the satellite is lower than 600 kilometers (km), the second timing range is 0 to 40 ms; if the altitude of the satellite is 600 to 12000 km, the second timing range is 40 to 600ms; and so on. In this way, after receiving the ephemeris information, the UE may determine the second timing range based on the ephemeris information.

In an embodiment, the ephemeris information may also be sent to the UE via a system message. In this way, according to embodiments of the present disclosure, the ephemeris information may be carried in the system message and sent via the system message, which may reduce the signaling overhead.

In an embodiment, the communication protocol pre-defines a correspondence relationship between the first indication information and the time offset of the second timing range. In this way, the time offset in the second timing range may be indicated via the first indication information.

For example, the second timing range sent by a base station to a UE is 0 to 100 ms, and the first indication information is "0001". The first indication information "0001" indicates 10, then it is determined that the first indication information indicates that the time offset in the second timing range of 0 to 100 ms is 10 ms.

For example, the second timing range sent by a base station to a UE is 0 to 100 ms, and the first indication information is "0101". The first indication information "0101" indicates 50, then it is determined that the first indication information indicates that the time offset in the second timing range of 0 to 100 ms is 50 ms.

For example, the second timing range sent by a base station to a UE is 101 to 200 ms, and the first indication information is "0101". The first indication information "0101" indicates 50, then it is determined that the first indication information indicates that the time offset in the second timing range of 101 to 201 ms is 150 ms.

For example, the second timing range sent by a base station to the UE is 0 to 100 ms, and the first indication information is "00000001". The first indication information "00000001" indicates 1, then it is determined that the first indication information indicates that the time offset in the second timing range of 0 to 100 ms is 1 ms.

In embodiments of the present disclosure, the network device in the NTN may send second timing ranges corresponding to different satellite communication scenarios to the UE, and send the first indication information to the UE, so that the UE may determine an accurate time offset from the second timing range based on the first indication information, thereby improving the reliability of the transmission between the network device in the NTN and the UE in different satellite communication scenarios.

It should be noted that those skilled in the art may understand that the methods according to embodiments of the present disclosure each may be performed alone or together with other methods in embodiments of the present disclosure or in the related art.

In the following, a communication method will be described, which is performed by a UE, and its descriptions are similar to the above descriptions of the communication method performed by the network device in the NTN. Moreover, for technical details not disclosed in embodiments of the communication method performed by the UE, reference may be made to the descriptions of examples of the communication method performed by the network device in the NTN, which will not be described in detail here.

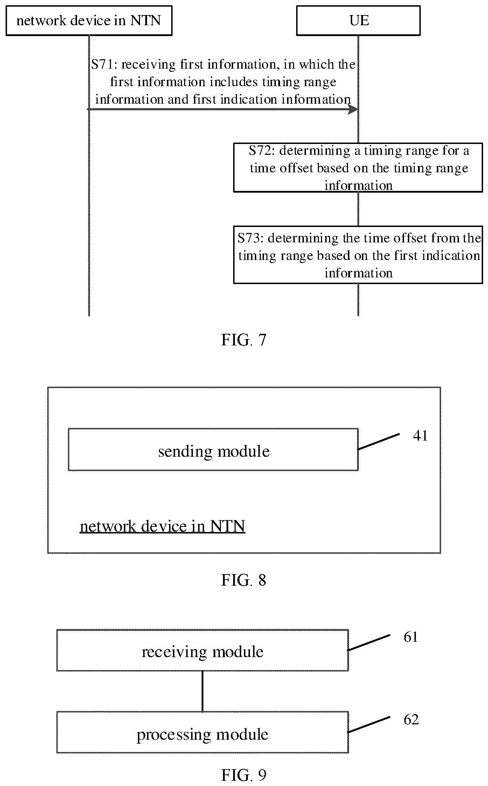

As shown in FIG. 7, embodiments of the present disclosure provide a communication method, which is performed by a UE and includes the steps S71ti to S73:

In step S71, first information is received. The first information includes timing range information and first indication information.

In step S72, a timing range for a time offset is determined based on the timing range information.

In step S73, the time offset is determined from the timing range based on the first indication information.

In an embodiment, the timing range information includes one of: a first timing range, a second timing range, second indication information indicating a second timing range, and ephemeris information. Here, the ephemeris information may be used to determine the second timing range.

In some embodiments of the present disclosure, the first information may be the first information in the step S41 or S51, the timing range information may be the timing range information in the step S41, the first indication information may be the first indication information in the step S41, and the ephemeris information may be the ephemeris information in the step S51.

In an embodiment, the first information includes: reference timing information indicating a reference timing time.

The step S72 includes: determining a first timing range for the time offset based on the first timing range included in the timing range information.

The step S73 includes: determining the time offset from the first timing range based on the first indication information and the reference timing time.

Embodiments of the present disclosure provide a communication method, which is performed by the UE, and may include: receiving first information that includes reference timing information indicating a reference timing time, a first timing range, and first indication information; and determining a time offset from the first timing range based on the first indication information and the reference timing time.

Embodiments of the present disclosure provide a communication method, which is performed by the UE, and may include: determining the time offset from the first timing range based on a product of a value indicated by the first indication information and the reference timing time.

In an embodiment, the reference timing information is determined based on ephemeris information of a satellite.

In an embodiment, the reference timing information includes one of: one or more slots corresponding to a predetermined SCS; or one or more slots.

In some embodiments, the step S72 includes one of: determining a second timing range for the time offset based on the second timing range included in the timing range information; determining a second timing range for the time offset based on second indication information indicating the second timing range and included in the timing range information; or determining a second timing range for the time offset based on ephemeris information included in the timing range information.

In some embodiments, determining the second timing range for the time offset based on the ephemeris information included in the timing range information includes: determining the second timing range for the time offset based on the ephemeris information and a preset correspondence relationship. The correspondence relationship is a correspondence relationship between the ephemeris information and the second timing range.

Embodiments of the present disclosure provide a communication method, which is performed by the UE, and may include: receiving first information that includes a second timing range and first indication information; and determining the time offset from the second timing range based on the first indication information.

Embodiments of the present disclosure provide a communication method, which is performed by the UE, and may include: receiving first information that includes second indication information and first indication information; determining a second timing range based on the second indication information; and determining a time offset from the second timing range based on the first indication information.

Embodiments of the present disclosure provide a communication method, which is performed by the UE, and may include: pre-storing a correspondence relationship between the second indication information and the second timing range.

Embodiments of the present disclosure provide a communication method, which is performed by the UE, and may include: receiving first information that includes ephemeris information and first indication information; determining a second timing range based on the ephemeris information; and determining a time offset from the second timing range based on the first indication information.

Embodiments of the present disclosure provide a communication method, which is performed by the UE, and may include: pre-storing a correspondence relationship between the ephemeris information and the second timing range.

Embodiments of the present disclosure provide a communication method, which is performed by the UE, and may include: pre-storing a correspondence relationship between the ephemeris information and the timing range.

Embodiments of the present disclosure provide a communication method, which is performed by the UE, and may include: receiving first indication information and ephemeris information; determining a second timing range based on the ephemeris information and a preset correspondence relationship; and determining a time offset from the second timing range based on the first indication information.

Embodiments of the present disclosure provide a communication method, which is performed by the UE, and may include: receiving first indication information and parsing ephemeris information from a system message; determining a second timing range based on the ephemeris information and a preset correspondence relationship; and determining a time offset from the second timing range based on the first indication information.

Embodiments of the present disclosure provide a communication method, which is performed by the UE, and may include: receiving a high-layer signaling carrying the first information; or receiving a physical layer signaling carrying the first information; or receiving a system message carrying the first information.

For details of the above implementations, reference may be made to the descriptions of embodiments described from the network device side in the NTN, which will not be described again here.

It should be noted that those skilled in the art may understand that the methods according to embodiments of the present disclosure each may be performed alone or together with other methods in embodiments of the present disclosure or in the related art.

As shown in FIG. 8, embodiments of the present disclosure provide a communication apparatus, which is applied to a network device in an NTN and includes: a sending module 41.

The sending module 41 is configured to send first information. The first information includes: timing range information and first indication information. The timing range information indicates a timing range for a time offset; and the first indication information indicates the time offset determined from the timing range.

In some embodiments, the timing range information includes: a first timing range. The first information further includes: reference timing information indicating a reference timing time. The reference timing time and the first indication information are configured to indicate the time offset determined from the first timing range.

Embodiments of the present disclosure provide a communication apparatus, which is applied to the network device in the NTN and may include: a sending module 41 configured to send first information. The first information includes: reference timing information indicating a reference timing time, a first timing range and first indication information. The reference timing time and the first indication information are used to indicate a timing offset determined from the first timing range.

Embodiments of the present disclosure provide a communication apparatus, which is applied to the network device in the NTN and may include: a processing module configured to determine the reference timing information based on ephemeris information of a satellite.

In some embodiments, the reference timing time includes one of: one or more slots corresponding to a predetermined SCS; or one or more slots.

In some embodiments, the timing range information includes: a second timing range or second indication information indicating the second timing range. The first indication information is configured to indicate the time offset determined from the second timing range.

In some embodiments, the timing range information includes: ephemeris information. The ephemeris information is configured to determine a second timing range for the time offset. The first indication information is configured to indicate the time offset determined from the second timing range.

Embodiments of the present disclosure provide a communication apparatus, which is applied to the network device in the NTN and may include: a sending module 41 configured to send first information. The first information includes: a second timing range and first indication information. The first indication information is configured to indicate a time offset determined from the second timing range.

Embodiments of the present disclosure provide a communication apparatus, which is applied to the network device in the NTN and may include: a sending module 41 configured to send first information. The first information includes: second indication information indicating a second timing range and first indication information. The first indication information is configured to indicate a time offset determined from the second timing range.

Embodiments of the present disclosure provide a communication apparatus, which is applied to the network device in the NTN and may include: a sending module 41 configured to send first information. The first information includes: ephemeris information and first indication information. The ephemeris information is configured to determine a second timing range for a time offset. The first indication information is configured to indicate the time offset determined from the second timing range.

Embodiments of the present disclosure provide a communication apparatus, which is applied to the network device in the NTN and may include: a sending module 41 configured to send a high-layer signaling or a physical layer signaling or a system message carrying first information.

It should be noted that those skilled in the art may understand that the apparatus according to embodiments of the present disclosure may be performed alone or together with other apparatus in embodiments of the present disclosure or in the related art.

Regarding the apparatus in the above embodiments, the specific manners in which each module performs operations have been described in detail in embodiments related to the method, which will not be described in detail here.

As shown in FIG. 9, embodiments of the present disclosure provide a communication apparatus, which is applied to a UE and includes: a receiving module 61 configured to receive first information that includes timing range information and first indication information; and a processing module 62 configured to determine a timing range for a time offset based on the timing range information.

The processing module 62 is configured to determine the time offset from the timing range based on the first indication information.

Embodiments of the present disclosure provide a communication apparatus, which is applied to the UE and may include: a receiving module 61 configured to receive first information that includes reference timing information indicating a reference timing time, a first timing range, and a first indication range; and a processing module 62 configured to determine a time offset from the first timing range based on the first indication information and the reference timing time.

In an embodiment, the reference timing information is determined based on ephemeris information of a satellite.

In an embodiment, the reference timing information includes one of: one or more slots corresponding to a predetermined SCS; or one or more slots.

Embodiments of the present disclosure provide a communication apparatus, which is applied to the UE and may include: a receiving module 61 configured to receive first information that includes a second timing range and first indication information; and a processing module 62 configured to determine a time offset from the second timing range based on the first indication information.

Embodiments of the present disclosure provide a communication apparatus, which is applied to the UE and may include: a receiving module 61 configured to receive first information that includes second indication information indicating a second timing range and first indication information; and a processing module 62 configured to determine the second timing range based on the second indication information; and determine a time offset from the second timing range based on the first indication information.

Embodiments of the present disclosure provide a communication apparatus, which is applied to the UE and may include: a receiving module 61 configured to receive first information that includes ephemeris information and first indication information; and a processing module 62 configured to determine a second timing range based on the ephemeris information; and determine a time offset from the second timing range based on the first indication information.

Embodiments of the present disclosure provide a communication apparatus, which is applied to the UE and may include: a processing module 62 configured to determine a second timing range for a time offset based on ephemeris information and a preset correspondence relationship. The correspondence relationship is a correspondence relationship between the ephemeris information and the second timing range.

Embodiments of the present disclosure provide a communication apparatus, which is applied to the UE and may include: a receiving module 61 configured to perform at least one of: receiving a high-layer signaling carrying the first information; receiving a physical layer signaling carrying the first information; or receiving a system message carrying the first information.

It should be noted that those skilled in the art may understand that the apparatus according to embodiments of the present disclosure may be performed alone or together with other apparatus in embodiments of the present disclosure or in the related art.

Regarding the apparatus in the above embodiments, the specific manners in which each module performs operations have been described in detail in embodiments related to the method, which will not be described in detail here.

Embodiments of the present disclosure provide a communication device, which includes: a processor; and a memory configured to store a processor-executable instruction. The processor is configured to implement the communication method according to any embodiment of the present disclosure when running the executable instruction.

In an embodiment, the communication device may be a network device in an NTN or a UE.

In an embodiment, the network device in the NTN includes: a base station.

The processor may include various types of storage media, which are non-transitory computer storage media that can continue to memorize information stored thereon when the user equipment is powered off.

The processor may be connected to the memory through a bus or the like, to read executable programs stored in the memory, for example, at least one of the methods as shown in FIG. 4 to FIG. 7.

Embodiments of the present disclosure also provide a computer storage medium, which has stored therein a computer executable program that, when executed by a processor, causes the communication method according to any embodiment of the present disclosure to be implemented, such as at least one of the methods shown in FIG. 4 to FIG. 7.

Regarding the device or the storage medium in the above embodiments, the specific manners in which each module performs operations have been described in detail in embodiments related to the method, which will not be described in detail here.

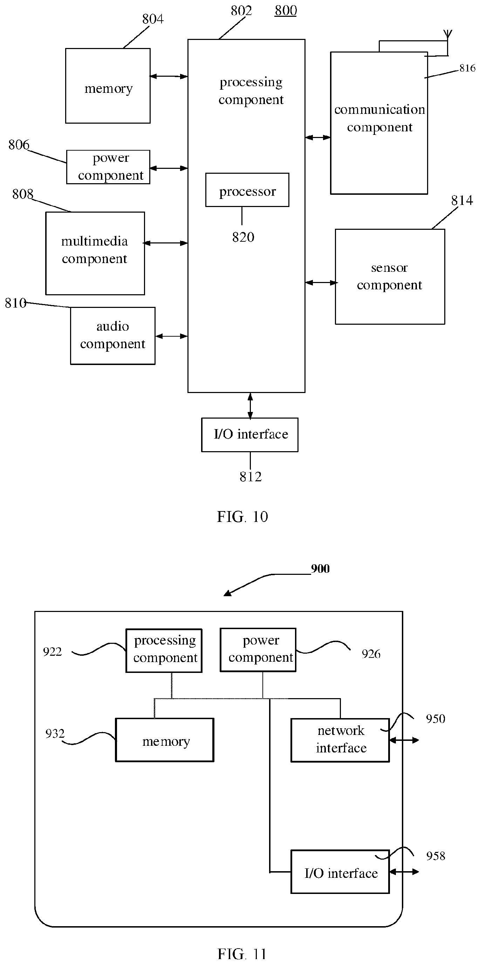

FIG. 10 is a schematic block diagram showing a user equipment 800 according to an illustrative embodiment. For example, the user equipment 800 may be a mobile phone, a computer, a digital broadcast user equipment, a messaging device, a game console, a tablet device, a medical device, a fitness device, a personal digital assistant, or the like.

Referring to FIG. 10, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the user equipment 800. For instance, the sensor component 814 may detect an open/closed status of the user equipment 800, relative positioning of components, e.g., the display and the keypad, of the user equipment 800. The sensor component 814 may also detect a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the user equipment 800 and other devices. The user equipment 800 can access a wireless network based on a communication standard, such as WiFi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a non-transitory computer-readable storage medium including instructions, such as included in the memory 804, executable by the processor 820 in the user equipment 800, for completing the above-mentioned method. For example, the non-transitory computer-readable storage medium may be a ROM, a random access memory (RAM), a CD-ROM, a magnetic tape, a floppy disc, an optical data storage device, and the like.

As shown in FIG. 11, an embodiment of the present disclosure shows a structure of a base station. For example, the base station 900 may be provided as a network side device. Referring to FIG. 11, the base station 900 includes a processing component 922, which further includes one or more processors, and a memory resource represented by a memory 932 configured to store instructions executable by the processing component 922, such as application programs. The application programs stored in the memory 932 may include one or more modules each corresponding to a set of instructions. In addition, the processing component 922 is configured to execute instructions to perform any of the foregoing methods performed by the base station, for example, the methods shown in FIG. 4 to FIG. 10.

The base station 900 may also include a power component 926 configured to perform the power management of the base station 900, a wired or wireless network interface 950 configured to connect the base station 900 to a network, and an input/output (I/O) interface 958. The base station 900 may operate an operating system stored in the memory 932, such as Windows Server TM, Mac OS XTM, UnixTM, LinuxTM, FreeBSDTM, or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A communication method, performed by a network device in a non-terrestrial network (NTN), comprising:

   sending first information, wherein the first information comprises: timing range information and first indication information; wherein the timing range information is configured to indicate a timing range for a time offset; and the first indication information is configured to indicate the time offset determined from the timing range.

2. The method according to claim 1, wherein the timing range information comprises: a first timing range; and

   the first information further comprises: reference timing information indicating a reference timing time;
   wherein the reference timing time and the first indication information are configured to indicate the time offset determined from the first timing range.

3. The method according to claim 2, comprising:
   determining the reference timing information based on ephemeris information of a satellite.

4. The method according to claim 2 or 3, wherein the reference timing time comprises one of:

   one or more slots corresponding to a predetermined subcarrier spacing (SCS); or
   one or more slots.

5. The method according to claim 1, wherein the timing range information comprises: a second timing range or second indication information indicating the second timing range;
   wherein the first indication information is further configured to indicate the time offset determined from the second timing range.

**6.** The method according to claim 1, wherein the timing range information comprises: ephemeris information, wherein the ephemeris information is configured to determine a second timing range for the time offset;
wherein the first indication information is further configured to indicate the time offset determined from the second timing range.

**7.** The method according to claim 1, wherein sending the first information comprises:
sending a high-layer signaling or a physical layer signaling carrying the first information.

**8.** A communication method, performed by a user equipment (UE), comprising:

receiving first information, wherein the first information comprises timing range information and first indication information;
determining a timing range for a time offset based on the timing range information; and
determining the time offset from the timing range based on the first indication information.

**9.** The method according to claim 8, wherein the first information comprises: reference timing information indicating a reference timing time;
determining the timing range for the time offset based on the timing range information comprises:

determining a first timing range for the time offset based on the first timing range comprised in the timing range information; and
determining the time offset from the timing range based on the first indication information comprises:
determining the time offset from the first timing range based on the first indication information and the reference timing time.

**10.** The method according to claim 9, wherein the reference timing information is determined based on ephemeris information of a satellite.

**11.** The method according to claim 9 or 10, wherein the reference timing information comprises one of:

one or more slots corresponding to a predetermined subcarrier spacing (SCS); or
one or more slots.

**12.** The method according to claim 8, wherein determining the timing range for the time offset based on the timing range information comprises one of:

determining a second timing range for the time offset based on the second timing range comprised in the timing range information;
determining a second timing range for the time offset based on second indication information indicating the second timing range and comprised in the timing range information; or
determining a second timing range for the time offset based on ephemeris information comprised in the timing range information.

**13.** The method according to claim 12, wherein determining the second timing range for the time offset based on the ephemeris information comprised in the timing range information comprises:
determining the second timing range for the time offset based on the ephemeris information and a preset correspondence relationship; wherein the correspondence relationship is a correspondence relationship between the ephemeris information and the second timing range.

**14.** The method according to claim 8, wherein receiving the first information comprises:
receiving a high-layer signaling or a physical layer signaling carrying the first information.

**15.** A communication apparatus, applied to a network device in a non-terrestrial network (NTN), comprising:
a sending module configured to send first information, wherein the first information comprises: timing range information and first indication information; wherein the timing range information is configured to indicate a timing range for a time offset; and the first indication information is configured to indicate the time offset determined from the timing range.

**16.** The apparatus according to claim 15, wherein the timing range information comprises: a first timing range; and

the first information further comprises: reference timing information indicating a reference timing time;
wherein the reference timing time and the first indication information are configured to indicate the time offset determined from the first timing range.

**17.** The apparatus according to claim 16, comprising:
a processing module configured to determine the reference timing information based on ephemeris information of a satellite.

**18.** The apparatus according to claim 16 or 17, wherein the reference timing time comprises one of:

one or more slots corresponding to a predetermined subcarrier spacing (SCS); or

one or more slots.

19. The apparatus according to claim 15, wherein the timing range information comprises: a second timing range or second indication information indicating the second timing range;
    wherein the first indication information is further configured to indicate the time offset determined from the second timing range.

20. The apparatus according to claim 15, wherein the timing range information comprises: ephemeris information, wherein the ephemeris information is configured to determine a second timing range for the time offset;
    wherein the first indication information is further configured to indicate the time offset determined from the second timing range.

21. The apparatus according to claim 15, wherein the sending module is configured to send a high-layer signaling or a physical layer signaling carrying the first information.

22. A communication apparatus, applied to a user equipment (UE), comprising:

    a receiving module configured to receive first information, wherein the first information comprises timing range information and first indication information; and
    a processing module configured to determine a timing range for a time offset based on the timing range information;
    wherein the processing module is further configured to determine the time offset from the timing range based on the first indication information.

23. The apparatus according to claim 22, wherein the first information comprises: reference timing information indicating a reference timing time;

    the processing module is further configured to determine a first timing range for the time offset based on the first timing range comprised in the timing range information; and
    the processing module is further configured to determine the time offset from the first timing range based on the first indication information and the reference timing time.

24. The apparatus according to claim 23, wherein the reference timing information is determined based on ephemeris information of a satellite.

25. The apparatus according to claim 23 or 24, wherein the reference timing information comprises one of:

one or more slots corresponding to a predetermined subcarrier spacing (SCS); or
one or more slots.

26. The apparatus according to claim 22, wherein the processing module is further configured to:

    determine a second timing range for the time offset based on the second timing range comprised in the timing range information; or
    determine a second timing range for the time offset based on second indication information indicating the second timing range and comprised in the timing range information; or
    determine a second timing range for the time offset based on ephemeris information comprised in the timing range information.

27. The apparatus according to claim 22, wherein the processing module is further configured to determine the second timing range for the time offset based on the ephemeris information and a preset correspondence relationship; wherein the correspondence relationship is a correspondence relationship between the ephemeris information and the second timing range.

28. The apparatus according to claim 22, wherein the receiving module is further configured to receive a high-layer signaling or a physical layer signaling carrying the first information.

29. A communication device, comprising:

    a processor; and
    a memory configured to store a processor-executable instruction;
    wherein the processor is configured to implement the communication method according to any one of claims 1 to 7 or claims 8 to 14 when running the executable instruction.

30. A computer storage medium, having stored therein a computer executable program that, when executed by a processor, causes the communication method according to any one of claims 1 to 7 or claims 8 to 14 to be implemented.

FIG. 1

FIG. 2

FIG. 3

```
┌──────────────────────────┐                      ┌──────────────────────────┐
│  network device in NTN   │                      │           UE             │
└──────────────────────────┘                      └──────────────────────────┘
             │                                                    │
             │   S41: sending first information, in which the first
             │   information includes: timing range information and
             │       first indication information; the timing range
             │   information is configured to indicate a timing range
             │       for the time offset; and the first indication
             │   information is configured to indicate the time offset
             │          determined from the timing range
             │───────────────────────────────────────────────────▶│
             │                                                    │
```

FIG. 4

```
┌──────────────────────────┐                      ┌──────────────────────────┐
│  network device in NTN   │                      │           UE             │
└──────────────────────────┘                      └──────────────────────────┘
             │                                                    │
             │   S51: sending first information, in which the first
             │   information includes: reference timing information
             │     indicating a reference timing time, a first timing
             │        range, and first indication information; the
             │          reference timing time and the first indication
             │   information are configured to indicate a time offset
             │          determined from the first timing range
             │───────────────────────────────────────────────────▶│
             │                                                    │
```

FIG. 5

```
┌──────────────────────────┐                      ┌──────────────────────────┐
│  network device in NTN   │                      │           UE             │
└──────────────────────────┘                      └──────────────────────────┘
             │                                                    │
             │   S61: sending first information; in which the first
             │      information includes: a second timing range and
             │     first indication information, or second indication
             │    information indicating a second timing range and
             │          first indication information, or ephemeris
             │      information and first indication information; the
             │   ephemeris information is configured to determine a
             │       second timing range for a time offset; the first
             │   indication information is configured to indicate the
             │      time offset determined from the second timing
             │                       range
             │───────────────────────────────────────────────────▶│
             │                                                    │
```

FIG. 6

| network device in NTN | | UE |
|---|---|---|

S71: receiving first information, in which the first information includes timing range information and first indication information

S72: determining a timing range for a time offset based on the timing range information

S73: determining the time offset from the timing range based on the first indication information

FIG. 7

sending module — 41

network device in NTN

FIG. 8

receiving module — 61

processing module — 62

FIG. 9

FIG. 10

FIG. 11

## INTERNATIONAL SEARCH REPORT

| International application No. |
| --- |
| **PCT/CN2021/120382** |

**A. CLASSIFICATION OF SUBJECT MATTER**

H04W 74/08(2009.01)i; H04B 17/309(2015.01)i; H04B 7/185(2006.01)i

According to International Patent Classification (IPC) or to both national classification and IPC

**B. FIELDS SEARCHED**

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNPAT; CNKI; EPODOC; WPI; 3GPP: 非地面网络, 信息, 指示, 偏移量, 定时, 提前, 参考, 星历, 子载波间隙, 时隙, NTN, signal, indicator, offset, TA, timing, advanced, reference, ephemeris, SCS, slot

**C. DOCUMENTS CONSIDERED TO BE RELEVANT**

| Category* | Citation of document, with indication, where appropriate, of the relevant passages | Relevant to claim No. |
| --- | --- | --- |
| A | MODERATORERICSSON. "Feature Lead Summary#5 on Timing Relationship Enhancements"<br>*3GPP TSG-RAN WG1 Meeting #106-e R1- 2108555*,<br>Vol. , No. , 27 August 2021 (2021-08-27),<br>ISSN: ,<br>pages 12-13 and 19 | 1-30 |
| A | XIAOMI. "Discussion on the Timing Relationship Enhancement for NTN"<br>*3GPP TSG RAN WG1 #106-e, R1-2107918*, Vol. , No. , 27 August 2021 (2021-08-27),<br>ISSN: ,<br>entire document | 1-30 |
| A | INTERDIGITAL. "Pre-compensation and Offset Calculation in NTN"<br>*3GPP RAN WG2 Meeting #111e R2-2007616*, Vol. , No. , 28 August 2020 (2020-08-28),<br>ISSN: ,<br>entire document | 1-30 |
| A | CN 112911699 A (ZHEJIANG LAB) 04 June 2021 (2021-06-04)<br>entire document | 1-30 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 March 2022** | **20 June 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 408 111 A1**

| | INTERNATIONAL SEARCH REPORT | International application No. |
|---|---|---|
| | | **PCT/CN2021/120382** |

**C. DOCUMENTS CONSIDERED TO BE RELEVANT**

| Category* | Citation of document, with indication, where appropriate, of the relevant passages | Relevant to claim No. |
|---|---|---|
| A | CN 111565472 A (TELECOMMUNICATIONS TECHNOLOGY RESEARCH INSTITUTE CO., LTD.) 21 August 2020 (2020-08-21)<br>entire document | 1-30 |
| A | WO 2021147898 A1 (CHINA MOBILE COMMUNICATION CO., LTD. RESEARCH INSTITUTE et al.) 29 July 2021 (2021-07-29)<br>entire document | 1-30 |
| A | US 2021250885 A1 (MEDIATEK SINGAPORE PTE. LTD.) 12 August 2021 (2021-08-12)<br>entire document | 1-30 |

Form PCT/ISA/210 (second sheet) (January 2015)

22

**INTERNATIONAL SEARCH REPORT**
Information on patent family members

International application No.

**PCT/CN2021/120382**

| Patent document cited in search report | | | Publication date (day/month/year) | Patent family member(s) | | | Publication date (day/month/year) |
|---|---|---|---|---|---|---|---|
| CN | 112911699 | A | 04 June 2021 | None | | | |
| CN | 111565472 | A | 21 August 2020 | WO | 2020164362 | A1 | 20 August 2020 |
| | | | | KR | 20210126669 | A | 20 October 2021 |
| | | | | EP | 3927097 | A1 | 22 December 2021 |
| WO | 2021147898 | A1 | 29 July 2021 | CN | 113163481 | A | 23 July 2021 |
| US | 2021250885 | A1 | 12 August 2021 | TW | 202131728 | A | 16 August 2021 |
| | | | | CN | 113316244 | A | 27 August 2021 |

Form PCT/ISA/210 (patent family annex) (January 2015)